# EUROPEAN PATENT APPLICATION

(11) **EP 2 631 861 A1**
(43) Date of publication of application: **28.08.2013**
(21) Application number: 13156262.1
(22) Date of filing: 22.02.2013
(51) Int. Cl.: G06Q 20/32

(54) **Method and apparatus for matching spaces using a space of interest (SOI)**

(30) Priority: 23.02.2012 KR 20120018497
(71) Applicant: HYUNDAI MOTOR COMPANY, Seoul 137-938 (KR)
(72) Inventor: Park, Cheol Woo, 138-751 Seoul (KR); Kwon, Soon Sung, 431-904 Anyang-si (KR)
(74) Representative: Isarpatent

(57) **Abstract**

The present invention relates to a space matching method and apparatus for two or more spaces using a space of interest (SOI). The space matching method includes storing the activity space of a business operator using an SOI object from a business operator terminal, recognizing information on the location of the customer of a customer terminal, and determining whether the information on the location of the customer overlaps with the activity space of the business operator or not, wherein the determining-whether-the-information-on-the-location-of-the-customer-overlaps-with-the-activity-space-of-the-business-operator-or-not includes determining whether SOI IDs are identical with each other if the information on the location of the customer has been designated as a basic SOI object.

## Description

### FIELD OF THE INVENTION

Embodiments of the present invention relate to a method and apparatus for matching a customer with the space of a business operator by using an SOI, and more particularly to a method and apparatus for determining whether an activity space designated by a business operator by using an SOI unit is matched with information on the location of a customer terminal or not.

### BACKGROUND OF THE INVENTION

In general, location-based data using a point of interest (POI) has a specific point, represented by X/Y coordinate values, as a unit. In location information service using the POI data, an area of a space, lower-ranking facilities, etc. cannot be accurately represented because only a point corresponding to corresponding coordinates is marked when searching for a specific location (e.g., when searching for a specific building, the entrance coordinates of the building are marked).

For this reason, in searching for location-based data, a concept indicative of a space called 'space of interest (SOI)' has been introduced. Efforts for constructing location information service consisting of the SOI unit have continued.

If an SOI object is used, an area, such as a specific building, can be easily directly selected on a map. Since objects included in the building are organically associated with each other, this method can be used in various fields of business.

In particular, in online and offline transactions, in case of an online transaction, the delivery time and costs are consumed because business operators and customers transact business around the country. If there is a great distance between areas, there is a problem in that online and offline transactions cannot be integrally operated.

### BRIEF SUMMARY OF THE INVENTION

Various embodiments of the present invention are based on the characteristics of an SOI, and an object of the present invention is to provide a space matching method and apparatus in which a business operator can designate his own activity space and which can be applied to both a case where a business operator terminal and a customer terminal are static and a case where a business operator terminal and a customer terminal are dynamic.

A first aspect of the present invention provides a space matching method for two or more spaces using an SOI. The space matching method includes storing the activity space of a business operator using an SOI object from a business operator terminal, recognizing information on the location of the customer of a customer terminal, and determining whether the information on the location of the customer overlaps with the activity space of the business operator or not, wherein the determining-whether-the-information-on-the-location-of-the-customer-overlaps-with-the-activity-space-of-the-business-operator-or-not includes determining whether SOI IDs are identical with each other if the information on the location of the customer has been designated as a basic SOI object.

Alternatively, the SOI object may include a unique SOI ID. Furthermore, the determining-whether-the-information-on-the-location-of-the-customer-overlaps-with-the-activity-space-of-the-business-operator-or-not may include determining whether corresponding spaces are matched with each other or not by performing a space operation between the activity space of the business operator and the information on the location of the customer, if the information on the location of the customer has not been designated as the basic SOI object.

If the information on the location of the customer has not been designated as the basic SOI object, the information on the location of the customer may be designated by a specific area using an SOI object or may be designated by common coordinates.

In addition, the determining-whether-the-information-on-the-location-of-the-customer-overlaps-with-the-geographical-information-of-the-activity-space-of-the-business-operator-or-not may include further determining whether or not an activity business area previously set by the business operator is identical with a transaction area desired by the customer.

Furthermore, the activity space of the business operator or the information on the location of the customer may include a space that is represented by the basic SOI object, represented by previously determined center coordinates and radius, represented by a path including the starting point and the destination, a direction of progress, and a radius, or randomly drawn and represented by the business operator or the customer.

A second aspect of the present invention provides a space matching apparatus for two or more spaces using an SOI. The space matching apparatus includes a business operator activity space the storage unit configured to store the activity space of a business operator using an SOI object from a business operator terminal, a customer location information recognition unit configured to recognize information on the location of the customer of a customer terminal, and a matching determination unit configured to determine whether the information on the location of the customer overlaps with the activity space of the business operator or not, wherein the matching determination unit may determine whether SOI IDs are identical with each other if the information on the location of the customer has been designated as a basic SOI object.

### BRIEF DESCRIPTION OF THE DRAWINGS

FIG. 1A is a block diagram showing a relation between a matching apparatus 130, a customer terminal 110, and a business operator terminal 150 in accordance with an embodiment of the present invention.
FIG. 1B shows a space matching method in accordance with an embodiment of the present invention.
FIGS. 2(A) to 2(C) are diagrams showing examples of matching methods in accordance with embodiments of the present invention.
FIGS. 3(A) to 3(D) show a variety of examples in which the activity space of a business operator is designated in accordance with embodiments of the present invention.
FIGS. 4 to 6 show examples in which the matching method is applied in accordance with embodiments of the present invention.

### DESCRIPTION OF EMBODIMENTS

Reference will now be made in detail to the embodiments of the present invention, examples of which are illustrated in the accompanying drawings. Wherever possible, the same reference numbers will be used throughout the drawings to refer to the same or like parts. It is to be understood that the detailed description which will be disclosed along with the accompanying drawings is intended to describe the exemplary embodiments of the present invention and is not intended to describe a unique embodiment through which the present invention can be carried out. Hereinafter, the detailed description includes detailed matters to provide full understanding of the present invention. However, it will be apparent to those skilled in the art that the present invention can be carried out without such detailed matters. In some instances, well-known structures and devices are omitted in order to avoid obscuring the concepts of the present invention and the important functions of the structures and devices are shown in block diagram form.

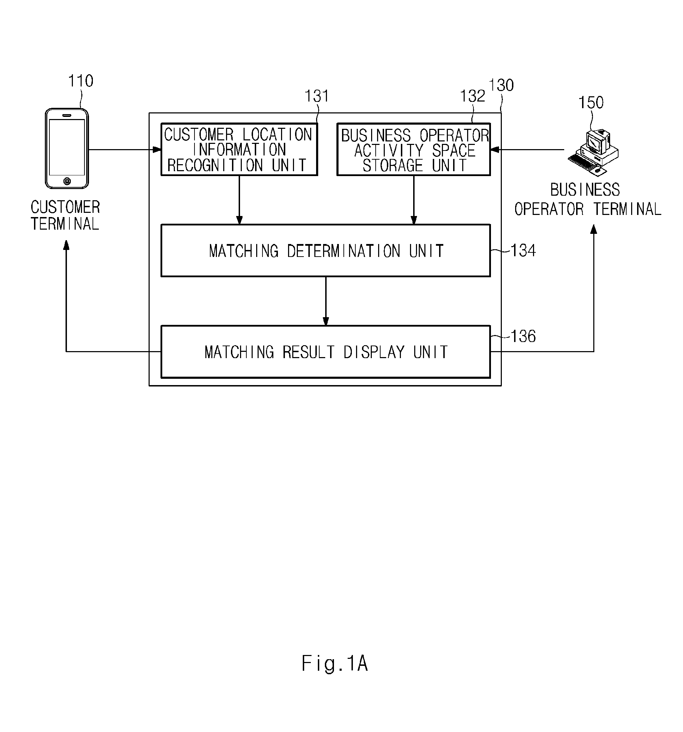

FIG. 1A is a block diagram showing a relation between a matching apparatus 130, a customer terminal 110, and a business operator terminal 150 in accordance with an embodiment of the present invention.

The matching apparatus 130 can include a customer location information recognition unit 131, a business operator activity space storage unit 132, a matching determination unit 134, and a matching result display unit 136. The matching apparatus 130 can operate in conjunction with the customer terminal 110 and the business operator terminal 150.

The customer terminal 110 refers to a computing device to be used when a customer transacts business. The customer terminal 110 can be a mobile device, such as a fixed Personal Computer (PC), a handheld terminal, a PDA, a smart phone, or a smart pad. Furthermore, the customer terminal 110 can include one or more terminals used by a customer.

The business operator terminal 150 can be implemented in a fixed form or a mobile form. The business operator terminal 150 can include various types of computing devices, such as a PC, a handheld terminal, a PDA, a smart phone, and a smart pad.

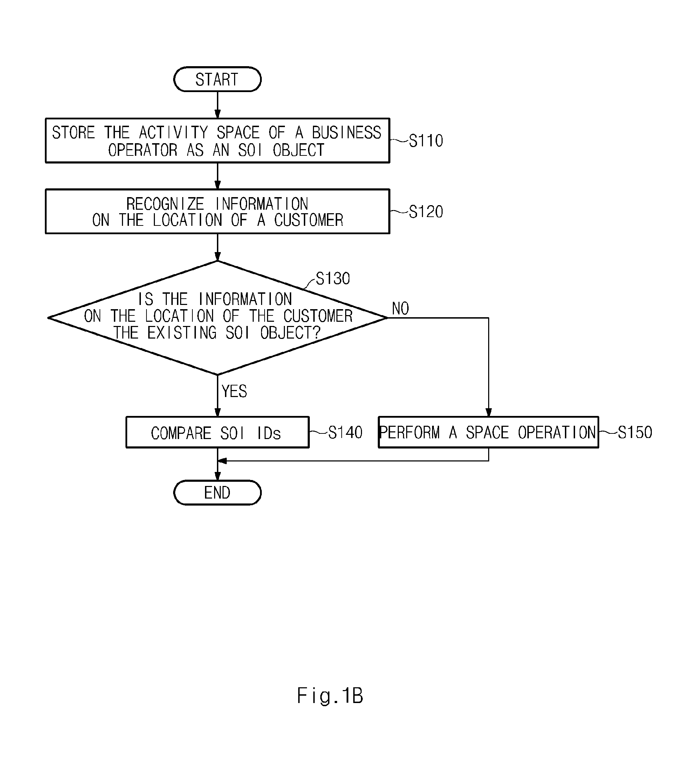

The matching apparatus 130 in accordance with an embodiment of the present invention functions to register information on the location of a customer and information on a business operator activity space received from the customer terminal 110 and the business operator terminal 150 and determine whether spaces are matched or not in order to relay signals between the customer terminal and the business operator terminal based on the pieces of information. The matching apparatus 130 can include additional elements for implementing the matching apparatus, such as an input/output unit and a control unit, in addition to the elements of FIG. 1, and a description of the additional elements is omitted in this specification.

The customer location information recognition unit 131 can receive information on the location of the customer terminal 110 from the customer terminal 110 and register the received information. The location of the customer terminal 110 can be fixed or mobile. The customer terminal 110 can include an on/off location information alarm function so that the matching apparatus can collect information on the location of the customer terminal 110. In one embodiment, the matching apparatus may be informed of information on the location of the customer terminal 110 when transaction information is registered or at a specific interval.

Here, information on the location of a customer may be information on a real location of the customer terminal 110 in one embodiment or may be information on a location (e.g., a bookstore to be visited) designated by the customer irrespective of the customer terminal in another embodiment.

For example, a customer may register information on a transaction condition in his customer terminal in addition to information on a location. The information on the transaction condition refers to information including a transaction item, a specification, and a price if the customer wants to transact an article or service. The information on a transaction condition can be registered in advance or in real time. The exposure of the transaction condition can be directly designated or registered by a radius (i.e., an area) according to the movement of the customer, a building, or the like. The information on the location of the customer terminal 110 and the information on the transaction condition can be registered in the customer location information recognition unit 131.

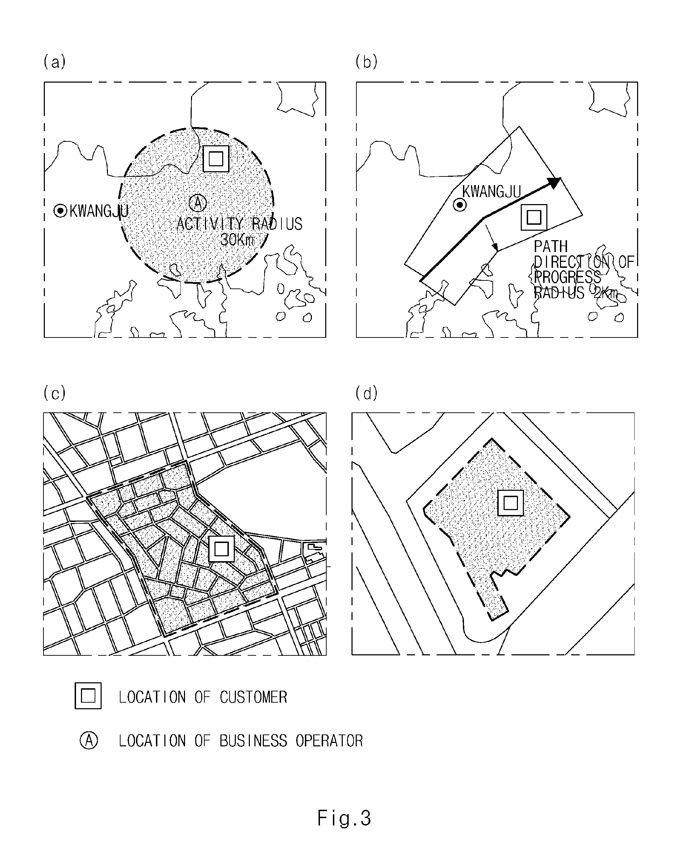

The business operator activity space storage unit 132 can receive pieces of information on a business operator, such as an activity space and a field of business in which the business operator wants to transact business, from the business operator terminal 150 and register the pieces of information. The activity space can be registered by setting the scope of activity, selecting a building or area, or directly setting an area. The business operator terminal 150 can be implemented in a fixed or mobile form, and thus various types of activity spaces can be set by taking the fixed or mobile form into consideration. The setting of the activity spaces is described in more detail with reference to FIG. 3.

The matching determination unit 134 can determine whether or not the space of the customer terminal 110 is matched with the space of the business operator terminal 150 based on information on the location of the customer registered in the customer location information recognition unit 131 and a business operator activity space registered in the activity space of the business operator storage unit 132.

More particularly, the matching determination unit 134 can determine whether information on the location of a customer falls within the activity space of the business operator terminal 150 or not and a degree that the information on the location of the customer overlaps with the activity space of the business operator terminal 150. That is, the matching determination unit 134 can determine whether a portable customer terminal has moved and entered the activity space of a business operator or not or whether a portable customer terminal is located within the activity space of a business operator or not.

Furthermore, the matching determination unit 134 can determine whether the contents of a transaction needed to be performed by a customer are identical with or similar to the contents of business (e.g., a transaction article or a service item) registered by a business operator based on information on a transaction condition. That is, the matching determination unit 134 can make a determination so that a transaction is started only when transactions have the same or similar types in order to match a customer terminal with a business operator.

In one embodiment, if the matching determination unit 134 determines that information on the location of a customer overlaps with the activity space of a business operator and that information on the transaction condition of the customer is identical with (or similar to) the contents of business of the business operator, the matching determination unit 134 can determine that a transaction is possible. In this case, for example, the information on the transaction condition of the customer can be exposed to the business operator.

The matching result display unit 136 can receive information on whether information on the location of a customer is matched with the activity space of a business operator or not or a degree that the information on the location of the customer overlaps with the activity space of the business operator from the matching determination unit 134 and display the received information on the customer terminal 110 and/or the business operator terminal 150. In one embodiment, the matching result display unit 136 can fetch information on the transaction condition of a customer in accordance with an instruction of the matching determination unit 134 and display the fetched information so that the business operator terminal 150 capable of transacting business can view the displayed information.

In another embodiment, the information on the transaction condition can be posted in such a way to be viewed. For another example, if a transaction is determined to be possible, information on the transaction condition of a customer can be transmitted to the business operator terminal 150 in the form of a notification message. Here, information on the location of the customer is not exposed.

In one embodiment, the business operator terminal 150 that has received or viewed information on a transaction condition can send a transaction proposal message that indicates an intention to want the transaction. The transaction proposal can be transmitted to the customer terminal 110. If the user terminal 110 accepts (or selects) a specific one of a plurality of the transaction proposals, the transaction acceptance information is transferred to the matching apparatus 130. In response thereto, the matching apparatus 130 can send the transaction acceptance information and information on the location of the customer to the business operator terminal.

In one embodiment, if a customer visits a business operator, a matching result may not be displayed in the business operator terminal 150 because information on the location of the customer does not need to be transmitted. In another embodiment, if a business operator must visit a customer, information on the location of the customer can be transmitted to the business operator terminal of the business operator.

Through the above construction, a customer and a business operator can exchange pieces of transaction information through their communication terminals within a specific space, and a transaction can be performed offline when deal is concluded. Accordingly, a disadvantage in that a customer is unable to directly see an article in the existing online transaction can be solved, and the delivery time and costs can be reduced because a transaction is performed within a close space (or a desired space).

FIG. 1B shows a space matching method in accordance with an embodiment of the present invention. A business operator can register his activity space in the matching apparatus 130 of the present invention at step S110. In one embodiment, although the term 'business operator' is used, the business operator can refer to any user who uses the matching apparatus of the present invention. In order to describe an example of space matching between a business operator and a customer in a specific transaction, the subject who designates an activity space by using the matching apparatus 130 is hereinafter called a business operator.

In the present invention, an activity space is registered for every SOI object. An SOI is an abbreviation of a space of interest. The SOI can have one or more hierarchical structures (e.g., a vertical structure, a horizontal structure or a complex structure thereof) hierarchically and refers to an object unit that can define a specific space. In this case, the specific space can be one building and associated with lower-ranking facilities within the building by way of lower-ranking SOI objects.

The business operator can select his activity space by using the SOI object. The business operator can select a basic SOI object as described above or may select a space area having a specific form by using an SOI. Here, the term 'basic SOI object' refers to a databased SOI unit that has been previously designated by a provider (or an SOI system business operator) who provides SOI objects. The basic SOI object can be a building (e.g., a school or a church) or a specific area (e.g., Mt. Gwanak or a tree-lined street in Apgujeong).

In contrast, a space having a specific form is one directly drawn or written by a business operator, and the space refers to a space assigned with an SOI ID when the space is stored. The space is selected by a method different from the existing coordinate method using a POI or a method using coordinates and a radius. The space can be selected in various ways by using space indication information (e.g., specific coordinates or a shape of a space) for representing a unique SOI ID and SOI, information on a location, etc.

Furthermore, the activity space can be differently set over time, and the activity space can be a static space or a dynamic space. Methods of selecting a variety of activity spaces are described in more detail later with reference to FIG. 3.

After registering the activity space by using an SOI object, the business operator checks information on the location of a customer terminal at step S120. Like the activity space of the business operator, the information on the location of the customer terminal can be a basic SOI object, a specific form using the basic SOI object, common coordinates, or a common space.

The matching apparatus 130 of the present invention recognizes the location of the customer and determines whether the activity space of the business operator is matched with information on the location of the customer or not. The matching apparatus 130 determines whether the information on the location of the customer corresponds to a basic SOI object or not at step S130. If the information on the location of the customer corresponds to one or more SOI objects, the matching apparatus 130 can compare the SOI ID of the activity space of the business operator with each of the SOI IDs of the information on the location of the customer and determine whether or not the two SOI IDs are identical with each other based on a result of the comparison. If, as a result of the determination, the two SOI IDs are determined to be identical with each other, the two spaces can be determined to be matched with each other at step S140.

Here, whether or not the two spaces are matched with each other can be determined by taking a lower-ranking SOI object ID into consideration. For example, assuming that the activity space of a business operator has an SOI ID called 'A' and information on the location of a customer has an SOI ID called 'B', that is, a lower-ranking SOI object of A, A and B can be determined to be matched with each other because information indicating that B is the ID of a lower-ranking SOI object of A has been defined in advance. A comparison of the SOI IDs can be set so that matching is determined only when SOI IDs are identical with each other or can be set so that matching is determined by taking a lower-ranking object SOI ID into consideration.

If, as a result of the determination at step S130, the information on the location of the customer is determined not to be a basic SOI object, the matching apparatus 130 performs a space operation at step S150. In one embodiment, if information on the location of a customer is a specific space using an SOI, the activity space of a business operator may not be compared with the SOI ID of the information on the location of the customer, but whether or not the two spaces are matched with each other can be determined by performing a space operation on the two spaces. That is, the matching apparatus 130 can perform a space operation by using specific coordinates and shape indicative of an SOI and determine whether or not the activity space of a business operator is identical with information on the location of a customer and a degree that the activity space of the business operator overlaps with the information on the location of the customer. The space operation can include a variety of space operation methods which can be used to determine whether two or more spaces are included or not and a degree that two or more spaces overlap with each other. In this specification, a detailed description of the space operation is omitted.

If information on the location of a customer is common location information not using an SOI, that is, coordinates, such as a POI, the space operation can be performed by using information on the activity space of a business operator and common information on the location of the customer.

The aforementioned matching method is based on the characteristics of an SOI object and is advantageous in that the matching time can be reduced by only comparing SOI IDs with each other when the spaces of two users are matched with each other. Furthermore, the matching method can be used to determine a degree that SOI IDs overlap with each other (e.g., 10% identical) by performing the space operation based on specific data indicative of the spaces even when the SOI IDs cannot be compared with each other. The matching method is also advantageous in that it can be used in a variety of business lines because the matching method can be applied to both a case where a user is static and a case where a user is dynamic.

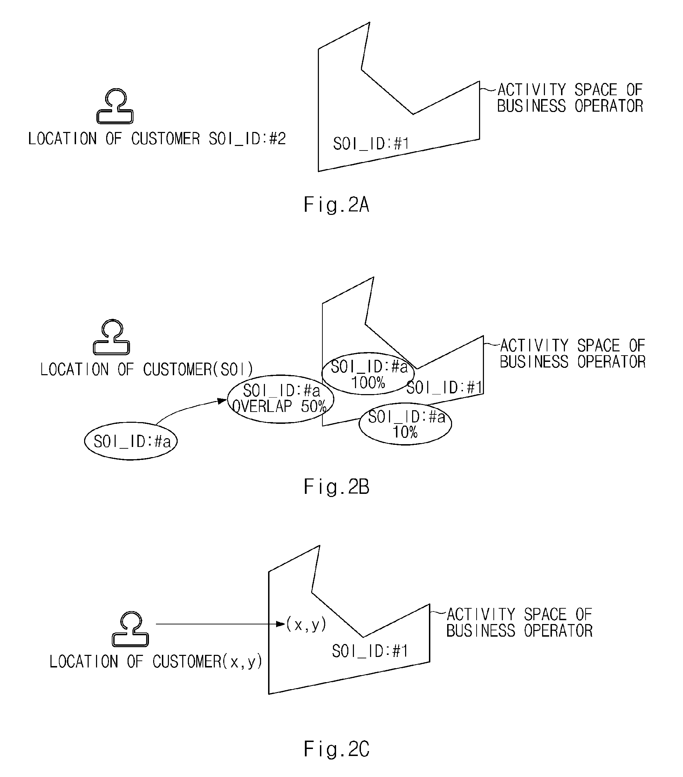

FIG. 2 shows diagrams of matching methods in accordance with embodiments of the present invention. That is, the examples described with reference to FIGS. 1A and 1B are diagramed and shown in FIG. 2. FIG. 2(A) shows a case where information on the location of a customer is a basic SOI object, FIG. 2(B) shows a case where information on the location of a customer is a specific space using an SOI, and FIG. 2(C) shows a case where information on the location of a customer correspond to common coordinates.

FIG. 2(A) shows a case where information on the location of a customer is a basic SOI object. In this case, all the IDs of basic SOI objects are databased, and whether the activity space of a business operator is matched with information on the location of a customer or not can be easily determined by comparing SOI IDs with each other. For example, if information on the location of a customer has an SOI ID #2 and a business operator has an SOI ID #1 as shown in FIG. 2(A), information on the location of the customer may be determined to be not matched with the activity space of the business operator because the SOI ID #2 and the SOI ID #1 are not identical with each other when the SOI IDs are compared with each other.

For another example, if information on the location of a customer has an SOI ID #12, assuming that the information is a lower-ranking facility within the same building if the first digits of SOI IDs are identical with each other, the information corresponds to a space included in the lower rank of the SOI ID #1 of a business operator. Accordingly, the information on the location of the customer can be determined to be matched with the activity space of the business operator.

This matching method is advantageous in that whether information on the location of a customer is matched with the activity space of a business operator or not can be determined more rapidly unlike the existing space matching method and the determination can be more precise because even a lower-ranking facility can be represented.

FIG. 2(B) shows a case where information on the location of a customer is a space having a specific form using an SOI. If information on the location of a customer is designated and stored as described above, a new SOI ID is assigned to the location, but there is a high possibility that an SOI ID having a system incomparable with the existing SOI ID may be generated. In this case, a space operation is performed because whether information on the location of the customer is matched with the activity space of a business operator or not cannot be determined by comparing SOI IDs with each other.

For example, if information on a specific location designated by a customer has an SOI ID #a as shown in FIG. 2(B), the SOI ID #a can be determined to be a specific area because it has a different system from the existing ID system, and thus a space operation can be performed. If the specific location has an oval as shown, the location can have data that includes focus coordinates, a long axis, a short axis, and a shape (i.e., an oval) in order to indicate the oval. If a space operation using the data is performed, whether spaces partially overlap with each other or not can be determined when the information on the oval location of the customer moves. As shown in FIG. 2(B), a percentage of matching, for example, 10%, 50%, or 100% can be indicated depending on an overlapping space area.

FIG. 2(C) shows a case where information on the location of a customer corresponds to common coordinates. As shown, the location of a customer can be represented by coordinates, such as (x,y). For example, the location of a customer can be represented by a radius including center coordinates. In case of common information on a location, whether the common information on the location is matched with the SOI activity space of a business operator or not can be determined by performing a space operation between the common information on the location and the SOI activity space of the business operator.

FIGS. 3(A) to 3(D) show a variety of examples in which the activity space of a business operator is designated in accordance with embodiments of the present invention.

FIG. 3(A) shows a case where the activity space of a business operator is designated as a radius of 30 km around the location A of a business operator. The location A of the business operator may be fixed or may be moved like a taxi.

FIG. 3(B) shows a case where a path is designated. For example, if a path in an arrow direction is designated in an expressway as shown, a radius of 2 km can be designated in the direction of progress. Here, only the right or left side of the direction of progress may be selectively designated. Furthermore, the right side or the left side may be selected depending on a change of the starting point and the destination (i.e., the direction of progress) by taking the direction of progress into consideration.

FIG. 3(C) shows a case where a business operator in person specifies a desired activity space on a map. If a desired area has an irregular form not a specific building or an administrative district, a user in person can specify an area by drawing the area.

The spaces of FIGS. 3(A) to 3(C) correspond to specific space forms. SOI IDs can be assigned to the respective spaces when a user specifies and stores the spaces.

FIG. 3(D) shows a case where a specific building or area is designated. In this case, there is an advantage in that a specific building or a lower-ranking facility within a specific building can be selected on a map by using a basic SOI unit.

The designation of this activity space may be set differently according to a time zone and may be set to be changed depending on a method in which a customer terminal moves.

In one embodiment, for example, a taxi driver can designate his scope of activity widely (e.g., 50 km) in the morning or narrowly (e.g., 10 km) in the evening on the basis of his mobile device or his communication device that is equipped with a GPS function and mounted on a vehicle.

In another embodiment, if a business operator terminal is located within a specific building, pedestrians can designate their activity spaces in various ways around their customer terminals within the building so that the pedestrians designate a radius (e.g., 5 km) around the building and customers who use vehicles can designate their activity spaces in various ways around the vehicles so that they designate a radius (e.g., 5 km) around the building, depending on methods in which the customers move.

If the aforementioned activity space designation methods are used, there is an advantage in that a business operator can subdivide and designate an activity space with consideration taken of a method in which a customer moves. Furthermore, a customer can search for a business operator that complies with a desired condition on the basis of the location of his customer terminal, and a business operator can be connected to a customer within a range in which service can be provided. Accordingly, there is an advantage in that the activity space designation methods of the present invention can be used in various fields of business.

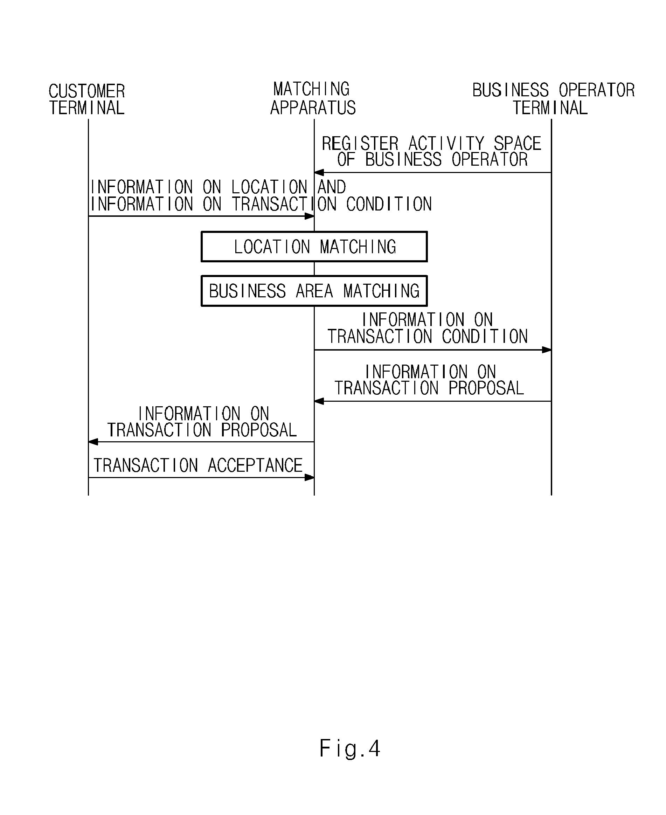

FIGS. 4 to 6 show examples in which the matching method is applied in accordance with embodiments of the present invention.

FIG. 4 is a swim lane diagram showing a transaction method between a customer and a business operator using the matching apparatus in accordance with one embodiment of the present invention. First, a business operator can register a desired activity space where a transaction is needed by using an SOI object. The reason why a desired activity space is registered without covering the whole country is to improve transaction efficiency by allowing customers within a specific area to transact business.

A customer may allow information on his location and/or information on a transaction condition to be uploaded to the matching apparatus 130. Here, the customer can select and designate his mobile phone, his Netbook, and/or a computer installed in a home as the customer terminal 110 through which the information on the location will be obtained.

In another embodiment, the customer can designate a desired area where purchasing is needed not the location of the customer terminal. For example, if a customer desires to visit Techno Mart, the customer can designate Techno Mart as his desired location although the customer terminal of the customer is not located at Techno Mart.

As described above, information on the location of a customer can be registered. In one embodiment, information on a transaction condition can be registered. For example, the information on the transaction condition can include a desired business area where a transaction is needed, an effective purchasing date, a range of a purchasing amount, etc.

After information on the location of a customer and information on the activity space of a business operator are registered and stored, the matching apparatus 130 can determine whether spaces are matched with each other or not by using the matching methods described with reference to FIGS. 1B and 2. Furthermore, in order to improve purchasing efficiency, further limited matching can be performed by matching business areas with each other.

In one embodiment, if, as a result of the determination, the spaces are determined to be matched with each other, the matching apparatus 130 can send the information on the transaction condition to the business operator terminal 150. In response thereto, the business operator terminal 150 can send information on a transaction proposal to the matching apparatus 130. The matching apparatus 130 can send the information on the transaction proposal to the customer terminal 110. If the customer of the customer terminal 110 accepts the transaction proposal, the matching apparatus 130 can send the information on the location of the customer to the business operator terminal 150.

In one embodiment, in using the above transaction method, the customer of the customer terminal 110 can turn on or off the on/off location information alarm function and perform the transaction method of the present invention whenever the customer wants a transaction. Furthermore, the business operator terminal 150 can be configured to turn on or off a possible activity state for the activity space where a specific location, a specific radius, and/or a specific area are designated so that the customer information and conditions can be received when the possible activity state is turned on.

Furthermore, the information on the transaction proposal transmitted by the business operator terminal 150 could have been directly written in relation to the information on the transaction condition of the customer, or information selected from pieces of previously written information on the transaction proposal may be selected as the information on the transaction proposal and transmitted.

In one embodiment, when the transaction for the transaction proposal of the business operator is accepted, the business operator terminal 150 may be configured to automatically turn off the possible activity state. This method can be used when a transaction is performed in relation to one article (e.g., a used article), such as a one-to-one transaction, rather than a specialized business operator.

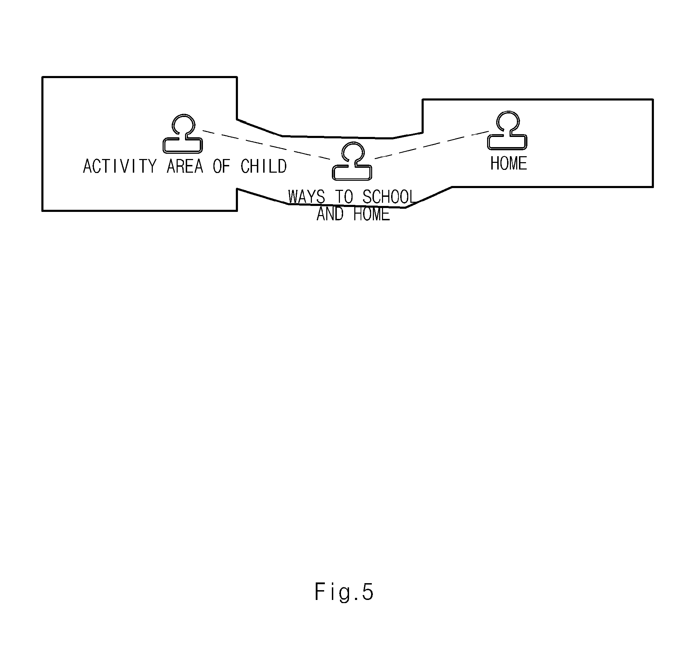

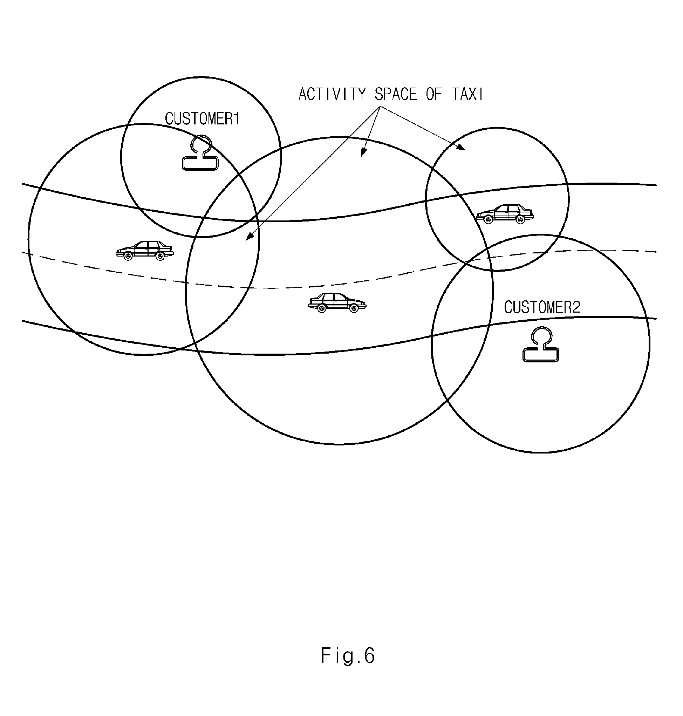

FIGS. 5 and 6 show examples in which a matching method in accordance with one embodiment of the present invention is applied. The matching method of the present invention can be applied to various fields of business to which the matching of two spaces is applied. For example, as shown in FIG. 5, parents can set the activity area of a child along a school, the child's ways to school and home, and a home between the parents and the child. The spaces can be designated using SOIs, such as those described with reference to FIGS. 1 and 2. Information on a location according to an actual movement of the child can be designated in various ways using an SOI as in FIG. 3. For example, if a child is located within an activity area designated by parents when the child moves or spaces are matched with each other 50% or higher by applying the space matching method of the present invention, it can be indicated by 'Safe'. If the spaces are matched with each other less than 50%, it can be indicated by 'Attention'. In this case, the matching method of the present invention can serve as safe service between parents and a child.

For another example, as shown in FIG. 6, the matching method of the present invention can be applied to a case where a taxi is picked up or a case where a call taxi is selected. The example of FIG. 5 corresponds to a case where a first static space area is matched with a second dynamic space area, whereas the example of FIG. 6 corresponds to a case where both spaces are dynamic.

In one embodiment, a taxi driver can designate a specific radius as his activity space on the basis of his mobile device or a communication device mounted on a vehicle and equipped with a GPS function or can designate only one direction as his activity space on the basis of a direction of progress as described with reference to FIG. 3(B). In this case, a moving business operator can designate an advantageous activity space because the designation may vary whenever the business operator moves. Additionally, a business operator can designate the scope of activity widely (e.g., 50 km) in the morning and narrowly (e.g., 10 km) in the evening.

While moving, a customer can register information on his location in the matching apparatus 130 so that the customer can request a taxi within several kilometers around the location and take the taxi. The location can be designated as the peripheries of a building represented by an SOI object, a direction of progress, or a specific space or common coordinates designated by the customer. The matching apparatus 130 can determine whether the driver of the taxi has been matched with the customer or not and output information on taking a taxi (e.g., a list of taxis that can be taken). If the matching method of the present invention is applied to a moving space as described above, there is an advantage in that both a space and directivity can be taken into consideration.

If the aforementioned service is implemented, a transaction can be efficiently requested and accepted between a customer and a business operator. Furthermore, if the matching method of the present invention is used, there are advantages in that an inconvenient procedure, such as the input of personal information or login, does not need to be performed and a transaction can be safely performed with no danger of personal information leaks because the transaction is based on only information on a location.

In addition to the examples shown in the figures, the matching method of the present invention can be used for a target advertisement if a customer is informed of information on an area or recommended information when the customer enters a specific place (e.g., a tourist resort or a dangerous area). For another example, when a customer gets out of the activity space of a business operator, that is, when spaces are mismatched, a goodbye message can be transmitted to the customer or recommended information can be provided to the customer before the customer leaves the activity space of the business operator. Furthermore, when a specific business operator is located close to a customer, notification service may be provided to the customer. For yet another example, the matching method of the present invention can also be applied to the counting of vehicles or articles when the vehicles or articles enter a factory or exit from the factory.

In the methods proposed by the present invention, a business operator can set a specific space, and the locations of customers who are located within the space or who enter the space are determined. Accordingly, target marketing is possible, a more efficient transaction can be performed, and the waste of the delivery time and costs can be reduced because a transaction is performed around the country like the existing online transaction.

Furthermore, in accordance with a variety of the activity space designation methods of the present invention, there are advantages in that a business operator can subdivide and designate his activity space by taking a method in which a customer moves into consideration and more efficient space matching than the existing matching is possible because SOIs are used when the spaces of a customer terminal and a business operator are matched with each other.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### SYMBOL OF EACH OF THE ELEMENTS IN THE FIGURES

### FIG. 1A

110: CUSTOMER TERMINAL
131: CUSTOMER LOCATION INFORMATION RECOGNITION UNIT
132: BUSINESS OPERATOR ACTIVITY SPACE STORAGE UNIT
134: MATCHING DETERMINATION UNIT
136: MATCHING RESULT DISPLAY UNIT
150: BUSINESS OPERATOR TERMINAL

### FIG. 1B

S110: STORE THE ACTIVITY SPACE OF A BUSINESS OPERATOR AS AN SOI OBJECT
S120: RECOGNIZE INFORMATION ON THE LOCATION OF A CUSTOMER
S130: IS THE INFORMATION ON THE LOCATION OF THE CUSTOMER THE EXISTING SOI OBJECT?
S140: COMPARE SOI IDS
S150: PERFORM A SPACE OPERATION

## Claims

1. A space matching method for two or more spaces of interest (SOI) set by a business operator terminal and a customer terminal, comprising:
storing geographical information, received from the business operator terminal and indicating an activity space of the business operator, in a space information storage unit as an SOI object;
extracting information on a location of the customer terminal and recognizing information on a location of the customer based on the extracted information; and
determining whether the information on the location of the customer overlaps with the geographical information of the activity space of the business operator or not,
wherein the determining-whether-the-information-on-the-location-of-the-customer-overlaps-with-the-geographical-information-of-the-activity-space-of-the-business-operator-or-not comprises comparing an SOI ID, indicating the geographical information on the activity space of the business operator, with an SOI ID indicating the information on the location of the customer entirely or partially and determining whether corresponding spaces overlap with each other or not based on a result of the comparison, if the recognized information on the location of the customer corresponds to a basic SOI object previously stored in the space information storage unit.

2. The space matching method according to claim 1, wherein:
the space information storage unit stores the SOI object and the basic SOI object,
the basic SOI object comprises information on a previously formed SOI object having a unique SOI ID, and
the SOI object comprises information on an SOI object having a unique SOI ID when the SOI object is set through the business operator terminal or the customer terminal.

3. The space matching method according to claim 1, wherein the determining-whether-the-information-on-the-location-of-the-customer-overlaps-with-the-geographical-information-of-the-activity-space-of-the-business-operator-or-not comprises determining whether the corresponding spaces overlap with each other or not by performing a space operation between the geographical information on the activity space of the business operator and the information on the location of the customer, if the information on the location of the customer has not been designated as the basic SOI object.

4. The space matching method according to claim 3, wherein if the information on the location of the customer has not been designated as the basic SOI object, the information on the location of the customer is indicated by geographical information having a specific form represented by the SOI object or indicated by common coordinates.

5. The space matching method according to claim 1, wherein the determining-whether-the-information-on-the-location-of-the-customer-overlaps-with-the-geographical-information-of-the-activity-space-of-the-business-operator-or-not comprises further determining whether or not information on an activity business area previously set through the business operator terminal is identical with information on a desired transaction area inputted through the customer terminal.

6. The space matching method according to any one of claims 1 to 5, wherein the geographical information on the activity space of the business operator or the information on the location of the customer comprises a space that is represented by the basic SOI object, represented by previously determined center coordinates and radius, represented by a path including a starting point and a destination, a direction of progress, and a radius, or randomly drawn and represented through the business operator terminal or the customer terminal.

7. The space matching method according to any one of claims 1 to 5, wherein the geographical information on the activity space of the business operator or the information on the location of the customer is represented by a static space having a fixed location and size and a dynamic space having a location and size that vary over time.

8. A space matching apparatus for two or more spaces of interest (SOI) set by a business operator terminal and a customer terminal, comprising:
a space information storage unit configured to store geographical information, received from the business operator terminal and indicating an activity space of the business operator, as an SOI object;
a customer location information recognition unit configured to extract information on a location of the customer terminal and recognize information on a location of the customer based on the extracted information; and
a matching determination unit configured to determine whether the information on the location of the customer overlaps with the geographical information of the activity space of the business operator or not,
wherein if the recognized information on the location of the customer corresponds to a basic SOI object previously stored in the space information storage unit, the matching determination unit compares an SOI ID, indicating the geographical information on the activity space of the business operator, with an SOI ID indicating the information on the location of the customer entirely or partially and determines whether corresponding spaces overlap with each other or not based on a result of the comparison.

9. The space matching apparatus according to claim 8, wherein:
the space information storage unit stores the SOI object and the basic SOI object,
the basic SOI object comprises information on a previously formed SOI object having a unique SOI ID, and
the SOI object comprises information on an SOI object having a unique SOI ID when the SOI object is set through the business operator terminal or the customer terminal.

10. The space matching apparatus according to claim 8, wherein the matching determination unit determines whether the corresponding spaces overlap with each other or not by performing a space operation between the geographical information on the activity space of the business operator and the information on the location of the customer, if the information on the location of the customer has not been designated as the basic SOI object.

11. The space matching apparatus according to claim 10, wherein if the information on the location of the customer has not been designated as the basic SOI object, the information on the location of the customer is indicated as geographical information having a specific form represented by the SOI object or indicated as common coordinates.

12. The space matching apparatus according to claim 8, wherein the determining-whether-the-information-on-the-location-of-the-customer-overlaps-with-the-geographical-information-of-the-activity-space-of-the-business-operator-or-not comprises further determining whether or not information on an activity business area previously set through the business operator terminal is identical with information on a desired transaction area inputted through the customer terminal.

13. The space matching apparatus according to any one of claims 8 to 12, wherein the geographical information on the activity space of the business operator or the information on the location of the customer comprises a space that is represented by the basic SOI object, represented by previously determined center coordinates and radius, represented by a path including a starting point and a destination, a direction of progress, and a radius, or randomly drawn and represented through the business operator terminal or the customer terminal.

14. The space matching apparatus according to any one of claims 8 to 12, wherein the geographical information on the activity space of the business operator or the information on the location of the customer is represented by a static space having a fixed location and size and a dynamic space having a location and size that vary over time.
